# EUROPÄISCHE PATENTSCHRIFT

(11) **EP 2 686 568 B1**
(45) Veröffentlichungstag und Bekanntmachung des Hinweises auf die Patenterteilung: **03.12.2014**
(21) Anmeldenummer: 12712561.5
(22) Anmeldetag: 27.02.2012
(51) Int. Cl.: F16D 25/08, F16D 48/02

(54) **DÄMPFUNGSEINRICHTUNG**
DAMPING DEVICE
DISPOSITIF D'AMORTISSEMENT

(30) Priorität: 15.03.2011 DE 102011014003
(43) Veröffentlichungstag der Anmeldung: 22.01.2014
(73) Patentinhaber: Schaeffler Technologies GmbH & Co. KG, 91074 Herzogenaurach (DE)
(72) Erfinder: BERTHELEMY, Pierre-Yves, 67000 Strassbourg (FR)
(86) Internationale Anmeldenummer: PCT/DE2012/000176
(87) Internationale Veröffentlichungsnummer: WO 2012/122961

(56) Entgegenhaltungen:
- WO-A1-2011/072635
- DE-A1- 1 475 701
- DE-A1-102006 017 694
- JP-A- 2 236 094
- US-A- 3 018 799
- US-A- 5 937 988

## Beschreibung

Die Erfindung betrifft eine Einrichtung zur Dämpfung von Druckschwingungen innerhalb einer hydraulischen Strecke zur Kupplungsbetätigung eines Fahrzeuges mit den Merkmalen des Oberbegriffs des Anspruchs 1.

Druckschwingungen, die beispielsweise in einer hydraulischen Strecke für eine Kupplungsbetätigung eines Kraftfahrzeuges auftreten, werden vom Verbrennungsmotor eines Kraftfahrzeuges auf die Kupplung übertragen. Von dieser ausgehend werden die Schwingungen über das Ausrücksystem bis hin zum Ausrückpedal bzw. Kupplungspedal weiter geleitet und kommen dort ggf. sogar vergrößert an.

Zur Reduzierung der Schwingungsamplituden der übertragenen Schwingungen werden Schwingungstilger verwendet, die nach dem Prinzip eines Helmholtz-Resonators arbeiten und eine Schwingung in einem bestimmten Frequenzbereich um die Resonanzfrequenz herum dämpfen.

Aus der DE 10 2008 003 991 A1 ist eine Lösung zur Unterdrückung von Eigenresonanzen in einer hydraulischen Strecke zur Kupplungsbetätigung eines Kraftfahrzeuges bekannt, bei der ein besonders ausgestalteter Helmholtz-Resonator verwendet wird. Dieser besteht aus einem Leitungsstück, das mit einem von diesem abzweigenden Behälter verbunden ist. Die aus einem T-Stück gebildete Verzweigung ermöglicht, den Helmholtz-Resonator mit dem Ausrücksystem zu verbinden. Das Ausrücksystem besteht bekanntermaßen im Wesentlichen aus einem Geber- und einem Nehmerzylinder, die mittels einer Druckleitung miteinander verbunden sind. Die Druckleitung ist ihrem Volumen entsprechend mit Hydraulikfluid befüllt und fungiert als Speicher für die kinetische Energie. Der als Druckspeicher fungierende Behälter hat die die Funktion eines federnden Elements mit einer bestimmten hydraulischen Kapazität. Er speichert damit die potentielle Energie. Die Abmessungen der Druckleitung und die hydraulische Kapazität des Behälters sollen nach der erfinderischen Lösung so abgestimmt werden, dass die Eigenfrequenz des Helmholtz-Resonators der zu filternden Frequenz im Ausrücksystem entspricht.

Ferner ist in der älteren, aber nicht vorveröffentlichten WO2011/072635 eine Einrichtung zur Dämpfung/Tilgung von unerwünschten Druckschwingungen in einer hydraulischen Strecke zur Kupplungsbetätigung eines Kraftfahrzeugs nach dem Oberbegriff des Anspruchs 1 offenbart.

Diese Helmholtz-Resonatoren können sehr effektiv ein bestimmtes Frequenzband filtern und damit tilgen, wodurch die Vibrationen am Pedal und die Geräusche während der Kupplungsbetätigung stark reduziert werden.

Die Bandbreite des Filters steigt dabei mit der Kapazität des Behälters. Außerdem spielt die Steifigkeit des Behälters eine wichtige Rolle bei der Funktionserfüllung der Dämpfungseinrichtung. Die Bandbreite der Tilgung der Schwingungen ist somit stark abhängig von der hydraulischen Kapazität des Speichers. Je nachgiebiger der Speicher ist, desto breitbandiger ist die Tilgungswirkung. Für die Frequenzabstimmung der Tilgung der Schwingungen mittels einer Dämpfungseinrichtung sind drei Parameter wichtig: die Steifigkeit des Gehäuses der Dämpfungseinrichtung, die Länge des Gehäuses der Dämpfungseinrichtung und der Querschnitt der Zuleitung für diese.

In einer koaxialen Anordnung einer Dämpfungseinrichtung ist die Steifigkeit deren Gehäuses direkt abhängig von der Gehäuselänge. Je länger also das Gehäuse, desto größer ist dessen Nachgiebigkeit und damit auch die Tilgung der Schwingungen. Um tiefe Frequenzen bei konstanter Steifigkeit zu tilgen, muss entweder die Zuleitung verlängert oder deren Querschnitt verkleinert werden.

Die Länge der Zuleitung für die Dämpfungseinrichtung zu verlängern hat allerdings den Nachteil, dass diese durch den Bauraum begrenzt ist. Der Querschnitt der Zuleitung muss außerdem so groß sein, dass eine korrekte Entlüftung gewährleistet ist.

Daher besteht die Aufgabe der Erfindung darin, eine Dämpfungseinrichtung nach dem Wirkprinzip eines Helmholtz-Resonators zur Tilgung tiefer Frequenzen mit einer Verlängerung der Zuleitung zu schaffen, ohne dabei die gesamte Konstruktion der Dämpfungseinrichtung zu verlängern und bei der der in diese eingesetzte Einsatz ohne zusätzliche Bauteile lagefixiert ist.

Diese Aufgabe wird mit einer Dämpfungseinrichtung mit den Merkmalen des Anspruchs 1 gelöst. Vorteilhafte Weiterbildungen ergeben sich aus den Unteransprüchen.

Danach umfasst die Einrichtung zur Dämpfung von Druckschwingungen innerhalb einer hydraulischen Strecke zur Kupplungsbetätigung eines Fahrzeuges einen Geberzylinder und einen Nehmerzylinder, die über eine von einem Fluid durchströmte Druckleitung hydraulisch miteinander verbunden sind, ein auf der Basis eines Helmholtz-Resonators arbeitendes, als Tilger ausgebildetes hohlzylindrisches, einen Kanal bildendes doppelwandiges Gehäuse, dessen endseitige Öffnung mit einem Deckel verschlossen ist. Erfindungsgemäß ist im Gehäuse ein Einsatz mit mindestens einem diesen in axialer Richtung verlängernden Fortsatz und einer Feder angeordnet, wobei der Einsatz über diesen Fortsatz im Kanal geführt und mittels der Feder im Gehäuse radial und axial verspannt wird.

Auf diese Weise wird sichergestellt, dass sich der Einsatz im Gehäuse nicht diesem gegenüber verdreht.

Besonders vorteilhaft ist es für die Kraftverteilung, wenn mehrere Fortsätze über den Umfang des Einsatzes verteilt an dessen Stirnfläche angebracht sind.

Außerdem ist es vorteilhaft, dass der Einsatz hohlzylindrisch ausgebildet ist, sodass an mindestens einem Teilbereich der zylindrischen Innenfläche der äußeren Wand des Einsatzes eine Leitung über ihren Außendurchmesser mit diesem fest verbunden werden kann.

Dazu ist es besonders vorteilhaft, dass der Durchmesser der inneren Wand des Einsatzes an die Größe des Außendurchmessers der Leitung angepasst ist. Dadurch kann die mit dem Einsatz verbundene Leitung in das Innere des Gehäuses eingeführt werden, wodurch eine Verlängerung der Leitung erreicht wird, ohne somit das Gehäuse und damit die Dämpfungseinrichtung in axialer Richtung zu verlängern.

Weiter ist es für die Realisierung einer Verspannung des Einsatzes im Gehäuse vorteilhaft, dass an mindestens einer Stelle der Innenfläche der äußeren Wand des Gehäuses eine rampenförmige Ausnehmung eingebracht ist, die, ausgehend von dessen Öffnung, derart ausgeführt ist, dass in diesem Bereich die Stärke der äußeren Wand des Gehäuses in Richtung Gehäuseinneres zunimmt. Dadurch nimmt die radiale Spannung zu, je weiter der Einsatz in das Gehäuse eingebracht wird.

Außerdem ist es für die Realisierung der radialen und axialen Verspannung des Einsatzes im Gehäuse ohne Verwendung zusätzlicher Bauteile besonders vorteilhaft, dass die Feder durch eine schlitzartige Ausnehmung in einem Bereich der Umfangsfläche des Einsatzes gebildet wird.

Außer zur Realisierung einer Verdrehsicherung zwischen Einsatz und Gehäuse ist es auch zunächst besonders vorteilhaft für die Montage zur Positionierung der beiden Bauteile zueinander, dass die mindestens eine Feder des Einsatzes mit der mindestens einen rampenförmigen Ausnehmung im Gehäuse in Wirkverbindung bringbar ist.

Weiter ist es für eine kostengünstige Herstellung besonders vorteilhaft, dass die erfindungsgemäße Dämpfungseinrichtung aus Kunststoff besteht.

Die Erfindung wird nachfolgend anhand eines Ausführungsbeispiels mit zugehörigen Zeichnungen näher erläutert.

Es zeigen:
- Figur 1: eine erfindungsgemäße Dämpfungseinrichtung im Schnitt;
- Figur 2: eine perspektivische Schnittdarstellung der Dämpfungseinrichtung aus Figur 1, die endseitig offen ist;
- Figur 3: den Einsatz der Dämpfungseinrichtung aus Figur 1 als Einzelteil in einer perspektivischen Darstellung.

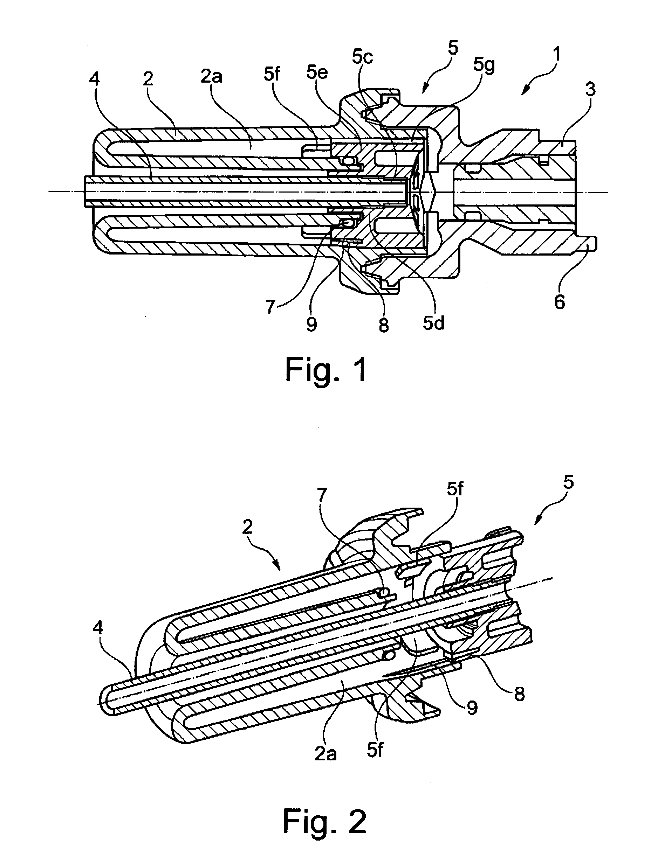

Aus Figur 1 ist eine Dämpfungseinrichtung im Schnitt ersichtlich, deren Bauteile vorzugweise kostengünstig aus Kunststoff hergestellt sind. Diese Dämpfungseinrichtung 1 besteht zur Herabsetzung der Steifigkeit aus einem doppelwandigen hohlzylindrischen Gehäuse, das endseitig von einem Deckel 3, vorzugsweise mittels Verschweißung, verschlossen wird. Die beiden Wände des Gehäuses 2 werden gebildet, indem die äußere Wand nach einer bestimmten Länge in den Hohlzylinder eingeschlagen wird, sodass die einstige äußere Wand ab dieser Umlenkung zur inneren Wand wird. Zur leichteren Entfernung des Kerns nach dem Spritzen des Gehäuses 2 verläuft die innere Wand derart konisch zur äußeren Wand, dass sich in Richtung Gehäuseöffnung die beiden Wände voneinander entfernen. Da die Umlenkung der äußeren Wand unter einem bestimmten Winkel stattfindet, schließt die umgelenkte Wand zur ursprünglichen äußeren Wand über ihre gesamte Länge einen Kanal 2a ein, der als Helmholtz-Resonator wirkt. Im Innern des so gebildeten Gehäuses 2 ist ein hohlzylindrischer Einsatz 5 angeordnet, der mit einer Leitung 4 verbunden ist. Dieser Einsatz 5 weist zumindest endseitig in Richtung Deckel 3 einen an den Außendurchmesser der Leitung 4 angepassten Bereich mit einer zentrischen Durchgangsbohrung 5c auf, sowie eine äußere Mantelfläche 5e und eine innere ringförmige Mantelfläche 5d. Der an den Außendurchmesser der Leitung 4 angepasste Abschnitt der inneren Mantelfläche 5d ist mit der in das Innere des Gehäuses 2 hinein reichenden Leitung 4, vorzugsweise mittels Verschweißung, fest verbunden. Mit in axialer Richtung über die äußere Mantelfläche 5e hinaus verlängerten Fortsätzen 5f, die über den Umfang des Einsatzes 5 verteilt an der Stirnfläche angeordnet sind und zur Positionierung des Einsatzes 5 vor dem Einpressen in das Gehäuse 2 dienen, greift der Einsatz 5 in den Kanal 2a des Gehäuses 2 ein.

Wie aus Figur 1 erkennbar, ist die äußere Mantelfläche 5e an mindestens einer Stelle parallel zu ihr über einen Teil des Umfanges geschlitzt und in axialer Richtung nutenartig ausgebildet, sodass dieser Bereich der Mantelfläche eine federförmige Ausgestaltung 8 erhält. Komplementär zu dieser Feder 8 am Einsatz 5 weist die äußere Wand des Gehäuses 2 eine entsprechende Ausnehmung mit einer Rampe 9 auf. Mit Hilfe dieser Ausgestaltung wird zwischen Gehäuse 2 und Einsatz 5 eine Verdrehsicherung realisiert, sodass sich der Einsatz 5 weder in radialer Richtung noch in axialer Richtung gegenüber dem Gehäuse 2 bewegen kann.

Aus dieser Figur ist ebenfalls ersichtlich, dass zur Definition der Lage des Deckels 3 zum Gehäuse 2 bzw. als Verdrehsicherung gegenüber dem Schweißwerkzeug am Deckel 3 ein Ansatz 6 vorgesehen ist.

Die Montage dieser Dämpfungseinrichtung 1 erfolgt folgendermaßen. Die durch das Gehäuse 2 gesteckte Leitung 4 wird mit dem an den Außendurchmesser der Leitung 4 angepassten Bereich des Einsatzes 5 verschweißt. Danach wird der Einsatz 5 mitsamt Leitung 4 in das Gehäuse 2 eingepresst, wobei zuvor auf der inneren Wand des Gehäuses 2 ein Dichtelement 7 aufgebracht wird, sodass der Einsatz 5 zum Gehäuse 2 hin abgedichtet ist. Bei diesem Vorgang dienen die Fortsätze 5f als Führung im Kanal 2a des Gehäuses 2. Außerdem dient zu Beginn der Montage ebenfalls die Feder 8 als Führung, durch die gleichzeitig die Position des Einsatzes 5 im Gehäuse 2 vorgegeben wird. Die Positionierung des Einsatzes 5 im Gehäuse 2 ist wichtig für die Zufuhr von Hydraulikfluid in den Kanal 2a des Gehäuses 2 über eine in der äußeren Wand 5e über die gesamte Länge des Einsatzes 5 vorgesehene Nut 5g. Über diese Nut 5g findet außerdem die Entlüftung der Dämpfungseinrichtung 1 statt. Je weiter der Einsatz 5 in das Gehäuse 2 eingepresst wird, umso mehr wird die Feder 8 am Einsatz 5 durch die rampenförmige Gestaltung der Ausnehmung 9 in der Innenfläche der äußeren Wand des Gehäuses 2 in radialer Richtung bewegt, wobei die radialen Kräfte auf die Gehäusewand immer stärker werden. Der Einsatz 5 wird so weit in das Gehäuse 2 eingeschoben und damit mit diesem verpresst, bis dieser mit seinem in dieser Figur nicht dargestellten Ansatz an einem vorgesehenen Anschlag am Gehäuse 2 anschlägt. Anschließend wird der Deckel 3 mit dem Gehäuse 2 verschweißt.

Figur 2 zeigt in einer perspektivischen Darstellung das Gehäuse 2 mit dem Einsatz 5 aus Figur 1, bevor dieser mit dem Gehäuse 2 fest verbunden wird. Aus dieser Darstellung sind die in den Kanal 2a des Gehäuses 2 hineinragenden axialen Fortsätze 5f des Einsatzes 5 erkennbar. Ebenso ist die in die Innenfläche der äußeren Wand des Gehäuses 2 eingebrachte rampenförmige Ausnehmung 9 sichtbar, in deren Ende die Feder 9 des Einsatzes 5 eingesetzt ist. Bis zum endgültigen Verpressen des Einsatzes 5 mit dem Gehäuse 2 fungiert diese Feder 8 ebenfalls wie die Fortsätze 5f am Einsatz 5, als dessen Führung. In diesem Zustand befindet sich also die Feder 8 des Einsatzes 5 noch im entlasteten Zustand. Ebenso ist die mit dem Einsatz 5 fest verbundene Leitung 4 und das bereits in die innere Wand des Gehäuses 2 eingelegte Dichtelement 7 erkennbar, das vorzugsweise als O-Ring ausgeführt ist.

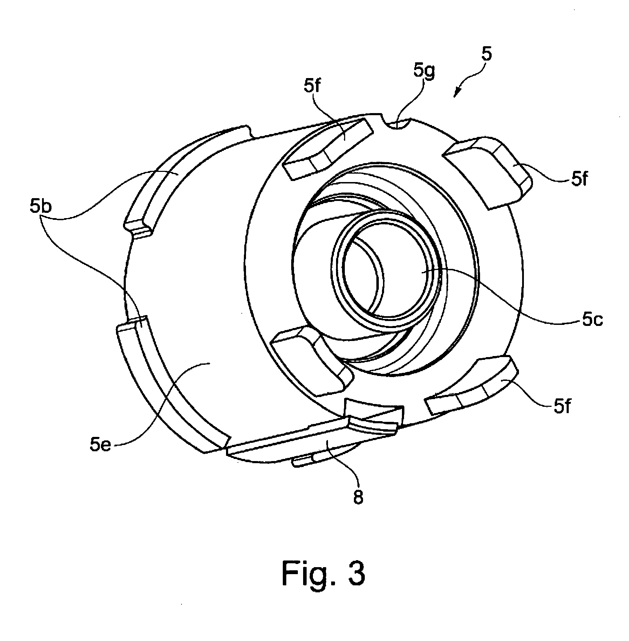

In Figur 3 ist der hohlzylindrische Einsatz 5 aus Figur 1 als Einzelteil dargestellt. An diesem, die zentrische Durchgangsbohrung 5c aufweisenden Einsatz 5, sind die laschenförmigen Fortsätze 5f in axialer Verlängerung der äußeren Wand 5e ersichtlich, die an dessen Stirnfläche angespritzt sind. Außerdem ist die zur Verspannung in axialer und radialer Richtung mit dem Gehäuse 2 dienende Feder 8 erkennbar. Durch den ausgebildeten Hohlraum in radialer Richtung kann sich diese in radialer Richtung soweit verformen, bis sie an den Rand des Hohlraumes anschlägt. Dieser Feder 8 in diesem Ausführungsbeispiel gegenüber liegend ist die in Figur 1 erwähnte Längsnut 5g sichtbar, die sowohl der Fluidzufuhr in das Gehäuse 2 als auch zu dessen Entlüftung dient. Außerdem ist der Bund 5b des Einsatzes 5 erkennbar. Dieser Bund 5b, der in diesem Falle nicht ringförmig, sondern kostengünstig aus sich in radialer Richtung erstreckender Erhebung gebildet wird, die endseitig des Zylinders über dessen Umfang verteilt angeordnet sind, fungiert als Anschlag in axialer Richtung für den Einsatz 5 im Gehäuse 2.

### Bezugszeichenliste

- 1: Dämpfungsrichtung
- 2: Gehäuse
- 2a: Kanal
- 3: Deckel
- 4: Leitung
- 5: Einsatz
- 5b: Bund
- 5c: Durchgangsbohrung
- 5d: innere Wand
- 5e: äußere Wand
- 5f: Fortsatz
- 5g: Nut/Längsnut
- 6: Ansatz
- 7: Dichtelement
- 8: Feder
- 9: rampenförmige Ausnehmung

## Patentansprüche

1. Einrichtung (1) zur Dämpfung von Druckschwingungen innerhalb einer hydraulischen Strecke zur Kupplungsbetätigung eines Kraftfahrzeuges, umfassend einen Geberzylinder und einen Nehmerzylinder, die über eine von einem Fluid durchströmte Druckleitung hydraulisch miteinander verbunden sind, mit einem auf der Basis eines Helmholtz-Resonators arbeitenden, als Tilger ausgebildeten hohlzylindrischen, einen Kanal (2a) bildenden doppelwandigen Gehäuse (2), dessen endseitige Öffnung mit einem Deckel (3) verschlossen ist, **dadurch gekennzeichnet, dass** im Gehäuse (2) ein Einsatz (5) mit mindestens einem diesen in axialer Richtung verlängernden Fortsatz (5f) und einer Feder (8) angeordnet ist, wobei der Einsatz (5) über diesen Fortsatz (5f) im Kanal (2a) geführt und mittels der Feder(8) radial und axial im Gehäuse (2) verspannt wird.

2. Dämpfungseinrichtung (1) nach Anspruch 1, **dadurch gekennzeichnet, dass** mehrere Fortsätze (5f) über den Umfang des Einsatzes (5) verteilt an dessen Stirnfläche angeordnet sind.

3. Dämpfungseinrichtung (1) nach Anspruch 1, **dadurch gekennzeichnet, dass** der Einsatz (5) hohlzylindrisch ausgebildet ist.

4. Dämpfungseinrichtung (1) nach Anspruch 1 und 3, **dadurch gekennzeichnet, dass** mindestens ein Teilbereich der zylindrischen inneren Wand (5d) des Einsatzes (5) mit dem Außendurchmesser der Leitung (4) fest verbunden ist.

5. Dämpfungseinrichtung (1) nach Anspruch 4, **dadurch gekennzeichnet, dass** der Durchmesser der inneren Wand des Einsatzes (5) an die Größe des Außendurchmessers der Leitung (4) angepasst ist.

6. Dämpfungseinrichtung (1) nach Anspruch 1, **dadurch gekennzeichnet, dass** an mindestens einer Stelle der Innenfläche der äußeren Wand des Gehäuses (2) eine rampenförmige Ausnehmung (9) eingebracht ist, die, ausgehend von dessen Öffnung, derart ausgeführt ist, dass in diesem Bereich die Stärke der äußeren Wand des Gehäuses (2) in Richtung Gehäuseinneres zunimmt.

7. Dämpfungseinrichtung (1) nach Anspruch 1, **dadurch gekennzeichnet, dass** die Feder (8) durch mindestens eine schlitzartige Ausnehmung in einem Bereich der Umfangsfläche des Einsatzes (5) gebildet wird.

8. Dämpfungseinrichtung (1) nach Anspruch 1, 6 und 7, **dadurch gekennzeichnet, dass** die mindestens eine Feder (8) des Einsatzes (5) mit der mindestens einen rampenförmigen Ausnehmung (9) im Gehäuse (2) in Wirkverbindung bringbar ist.

9. Dämpfungseinrichtung (1) nach Anspruch 1, **dadurch gekennzeichnet, dass** die Dämpfungseinrichtung (1) aus Kunststoff besteht.

## Claims

1. Device (1) for the damping of pressure oscillations within a hydraulic tract for the actuation of the clutch of a motor vehicle, comprising a master cylinder and a slave cylinder which are connected hydraulically to one another via a pressure line through which the fluid flows, with a hollow-cylindrical double-walled housing (2) which operates on the basis of a Helmholtz resonator and is designed as an absorber and forms a duct (2a) and the end orifice of which is closed by means of a cover (3), **characterized in that** the housing (2) has arranged in it an insert (5) with at least one extension (5f) prolonging the latter in the axial direction and with a spring (8), the insert (5) being guided in the duct (2a) via this extension (5f) and being braced radially and axially in the housing (2) by the means of the spring (8).

2. Damping device (1) according to Claim 1, **characterized in that** a plurality of extensions (5f) are arranged on the end face of the insert (5) so as to be distributed on the circumference of the latter.

3. Damping device (1) according to Claim 1, **characterized in that** the insert (5) is of hollow-cylindrical form.

4. Damping device (1) according to Claims 1 and 3, **characterized in that** at least one subregion of the cylindrical inner wall (5d) of the insert (5) is firmly connected to the outside diameter of the line (4).

5. Damping device (1) according to Claim 4, **characterized in that** the diameter of the inner wall of the insert (5) is adapted to the size of the outside diameter of the line (4).

6. Damping device (1) according to Claim 1, **characterized in that** a ramp-shaped recess (9) is introduced at at least one point of the inner surface of the outer wall of the housing (2) and, starting from the orifice of the latter, is designed in such a way that, in this region, the thickness of the outer wall of the housing (2) increases in the direction of the housing interior.

7. Damping device (1) according to Claim 1, **characterized in that** the spring (8) is formed by at least one slot-like recess in a region of the circumferential surface of the insert (5).

8. Damping device (1) according to Claims 1, 6 and 7, **characterized in that** the at least one spring (8) of the insert (5) can be connected operatively to the at least one ramp-shaped recess (9) in the housing (2).

9. Damping device (1) according to Claim 1, **characterized in that** the damping device (1) consists of plastic.

## Revendications

1. Dispositif (1) pour l'amortissement des variations de pression à l'intérieur d'une section hydraulique pour la commande d'embrayage d'un véhicule automobile, comprenant un maître-cylindre et un cylindre récepteur qui sont connectés l'un à l'autre hydrauliquement par le biais d'une conduite de pression parcourue par un fluide, avec un boîtier (2) à double paroi, cylindrique creux, fonctionnant sur la base d'un résonateur de Helmholtz, réalisé sous forme d'amortisseur, et formant un canal (2a), dont l'ouverture du côté de l'extrémité est fermée par un couvercle (3), **caractérisé en ce qu'**un insert (5) est disposé dans le boîtier (2), avec au moins une saillie (5f) prolongeant celui-ci dans la direction axiale et un ressort (8), l'insert (5) étant guidé dans le canal (2a) par le biais de cette saillie (5f) et étant serré au moyen du ressort (8) radialement et axialement dans le boîtier (2).

2. Dispositif d'amortissement (1) selon la revendication 1, **caractérisé en ce que** plusieurs saillies (5f) sont disposées de manière répartie sur la périphérie de l'insert (5) au niveau de la surface frontale de celui-ci.

3. Dispositif d'amortissement (1) selon la revendication 1, **caractérisé en ce que** l'insert (5) est réalisé sous forme cylindrique creuse.

4. Dispositif d'amortissement (1) selon la revendication 1 et 3, **caractérisé en ce qu'**au moins une région partielle de la paroi interne cylindrique (5d) de l'insert (5) est connectée fixement au diamètre extérieur de la conduite (4).

5. Dispositif d'amortissement (1) selon la revendication 4, **caractérisé en ce que** le diamètre de la paroi interne de l'insert (5) est adapté à la taille du diamètre extérieur de la conduite (4).

6. Dispositif d'amortissement (1) selon la revendication 1, **caractérisé en ce qu'**un évidement en forme de rampe (9) est réalisé au niveau d'au moins un emplacement de la surface interne de la paroi extérieure du boîtier (2), lequel évidement, à partir de son ouverture, est réalisé de telle sorte que dans cette région l'épaisseur de la paroi extérieure du boîtier (2) augmente dans la direction de l'intérieur du boîtier.

7. Dispositif d'amortissement (1) selon la revendication 1, **caractérisé en ce que** le ressort (8) est formé par au moins un évidement en forme de fente dans une région de la surface périphérique de l'insert (5).

8. Dispositif d'amortissement (1) selon la revendication 1, 6 et 7, **caractérisé en ce que** l'au moins un ressort (8) de l'insert (5) peut être amené en liaison fonctionnelle avec l'au moins un évidement (9) en forme de rampe dans le boîtier (2).

9. Dispositif d'amortissement (1) selon la revendication 1, **caractérisé en ce que** le dispositif d'amortissement (1) se compose de plastique.
